# EUROPÄISCHE PATENTSCHRIFT

(11) **EP 0 982 520 B1**
(45) Veröffentlichungstag und Bekanntmachung des Hinweises auf die Patenterteilung: **28.07.2004**
(21) Anmeldenummer: 99115804.9
(22) Anmeldetag: 11.08.1999
(51) Int. Cl.: F16K 27/00, F16L 41/03, F16L 37/08, F16L 37/10

(54) **Einrichtung zum Verbinden von hydraulischen oder pneumatischen Komponenten, insbesondere von Elektromagnetventilen miteinander**
Device for connecting together hydraulic or pneumatic components, particularly solenoid valves
Dispositif pour connecter les composants hydrauliques ou pneumatiques ensemble, surtout les electrovannes

(30) Priorität: 20.08.1998 DE 19837767
(43) Veröffentlichungstag der Anmeldung: 01.03.2000
(73) Patentinhaber: A. und K. Müller GmbH & Co. KG, 40595 Düsseldorf (DE)
(72) Erfinder: Preisser, Wolfgang, Dipl.-Ing., 40721 Hilden (DE)
(74) Vertreter: Feder, Wolf-Dietrich, Dr. Dipl.-Phys.

(56) Entgegenhaltungen:
- EP-A- 0 554 096
- EP-A- 0 715 112
- DE-A- 4 032 515
- US-A- 4 782 852

## Beschreibung

Die Erfindung betrifft eine Einrichtung zum Verbinden von hydraulischen oder pneumatischen Komponenten, insbesondere von Elektromagnetventilen miteinander, welche die Merkmale aus dem Oberbegriff des Patentanspruchs 1 aufweist.

Es ist bekannt, mehrere hydraulische oder pneumatische Komponenten, insbesondere auch Elektromagnetventile in Serien- und/oder Parallelschaltung zu einer Block- bzw. Bankarmatur miteinander zu verbinden, wobei häufig die Forderung besteht, diese Verbindung mehrerer Komponenten in alle drei Raumrichtungen zu erstrecken. Ein derartiges System ist beispielsweise in EP 0 715 112 A2 sowie in FR 1 579 506 A beschrieben.

Es ist bekannt, derartige Komponenten mittels Verschraubung, Verbindungsstangen, Klemmen oder Spangen miteinander zu verbinden. So ist beispielsweise in EP 0 715 112 A2 eine Verbindungsart beschrieben, bei welcher am steckerartigen Verbindungsteil einer Steck-Einrastverbindung Verriegelungselemente angeordnet sind, die mit an einer auf das buchsenartige Verbindungselement aufsteckbaren Klammer angeordneten Gegenelementen zusammenwirken.

Verbindungen mittels Verschraubung sind grundsätzlich nur eindimensional oder im Rahmen der Verdrehmöglichkeiten der jeweiligen Komponenten mehrdimensional möglich. Verbindungen mittels Verschraubung durch Überwurfmuttern besitzen diese Beschränkung nicht, sind aber durch den benötigten Platz für die Überwurfmutter nur in größerem Abstand zueinander montierbar. Verbindungen mittels Verbindungsstangen sind nur mit an das Enderzeugnis angepaßten, d.h. auf die notwendige Länge gefertigten Stangen erzeugbar. Die Demontage einer Komponente ist dann nur durch Entfernen der Stangen möglich. Verbindungen mit Klemmen oder Spangen sind in der Regel nur eindimensional montierbar. Nachteilig ist hier das Vorhandensein von losen Verbindungsteilen.

Der Erfindung liegt die Aufgabe zugrunde, eine Einrichtung zum Verbinden von hydraulischen und pneumatischen Komponenten, insbesondere von Elektromagnetventilen miteinander, welche die Merkmale aus dem Oberbegriff des Patentanspruchs 1 aufweisen, so auszugestalten, daß sie insbesondere bei aus mehreren, vor allem in allen drei Raumrichtungen zusammengeschalteten Komponenten aufgebauten Armaturen einsetzbar ist. Die Komponenten sollten schnell miteinander verbindbar sein, ohne daß Bauteile gegeneinander verdreht werden müssen und ohne daß lose, verlierbare Verbindungsteile vorhanden sind. Es sollte kein zusätzlicher Platz zwischen den Komponenten benötigt werden und es sollte das Herauslösen einzelner Komponenten möglich sein, ohne die ganze Einheit demontieren zu müssen.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, zusammenwirkende Verriegelungselemente zu schaffen, von denen jeweils eines fest am steckerartigen Verbindungsteil angeordnet ist, während das andere unverlierbar mit dem buchsenartigen Verbindungsteil verbunden ist derart, daß durch einfaches Verschwenken eines aus dem buchsenartigen Verbindungsteil herausgeführten Betätigungshebels eine Verriegelung und Entriegelung der Verbindung möglich ist. Der Betätigungshebel kann mit der Hand oder mit einem kleinen Werkzeug in beiden Richtungen verschwenkt werden, und somit ist eine Montage auch in komplizierten Situationen möglich.

Bei einer besonders vorteilhaften Ausführungsform, die weiter unten anhand eines Ausführungsbeispiels näher erläutert wird, kann der mittels des Betätigungshebels verdrehbare Verriegelungsring drei verschiedene Positionen einnehmen. In einer "Montagestellung" sind die Komponenten zusammensteckbar, wobei nach dem Zusammenstecken ein automatisches Einrasten der Verriegelungselemente erfolgt. Nach diesem Einrasten können durch Verdrehen des Verriegelungsringes aus der Montagestellung in eine Freigabestellung gegen Federkraft die Komponenten wieder voneinander gelöst werden. Die endgültige Verriegelung der Komponenten erfolgt durch Verdrehen des Verriegelungsringes aus der Montagestellung in die Verriegelungsstellung, in der die Komponenten unlösbar miteinander verbunden sind. Zum Lösen muß der Verriegelungsring aus der Verriegelungsstellung zurück in die Montagestellung und dann gegen Federkraft weiter in die Freigabestellung bewegt werden. Ein besonderer Vorteil dieser erfindungsgemäßen Einrichtung besteht darin, daß das Verbinden einhändig möglich ist, während das Lösen nur zweihändig möglich ist und somit ein ungewolltes Lösen der Verbindung verhindert wird.

Im folgenden werden anhand der beigefügten Zeichnungen ein Ausführungsbeispiel für die erfindungsgemäße Verbindungseinrichtung und ein Beispiel für ein zusammengeschaltetes System von Komponenten näher erläutert.

In den Zeichnungen zeigen:
Fig. 1 in einer Ansicht in axialer Richtung in Teildarstellung eine von zwei miteinander zu verbindende Komponenten einer Armatur kurz vor dem Zusammensetzen;
Fig. 2 die beiden Komponenten in einer teilweise nach der Linie B-B in Fig. 1 geschnittenen Seitenansicht;
Fig. 3 einen Schnitt nach der Linie A-A in Fig. 2;
Fig. 4 einen Schnitt nach der Linie C-C in Fig. 3;
Fig. 5 in einer Darstellung analog Fig. 1 die Komponente nach dem Zusammensetzen und Einrasten der Verriegelungselemente;
Fig. 6 die Komponenten im Zustand nach Fig. 5 in einer Darstellung analog Fig. 2;
Fig. 7 einen Schnitt nach der Linie A-A in Fig. 6;
Fig. 8 einen Schnitt nach der Linie C-C in Fig. 7 in zwei aufeinander folgenden Phasen des Einrastens;
Fig. 9 in einer Darstellung analog Fig. 1 die Komponente im Zustand nach der endgültigen Verriegelung;
Fig. 10 die Komponenten im Zustand gemäß Fig. 9 in einer Darstellung analog Fig. 2;
Fig. 11 einen Schnitt nach der Linie A-A in Fig. 10;
Fig. 12 einen Schnitt nach der Linie C-C in Fig. 11;
Fig. 13 in einer Darstellung analog Fig. 1 die Komponente beim Lösen der Verbindungseinrichtung;
Fig. 14 in einer Darstellung analog Fig. 2 die Komponenten im Zustand gemäß Fig. 13;
Fig. 15 einen Schnitt nach der Linie A-A in Fig. 14;
Fig. 16 einen Schnitt nach der Linie C-C in Fig. 15;
Fig. 17 in einer Seitenansicht eine aus mehreren Komponenten zusammengeschaltete Armatur;
Fig. 18 die Armatur nach Fig. 17 in Vorderansicht;
Fig. 19 die Armatur nach Fig. 17 in Draufsicht.

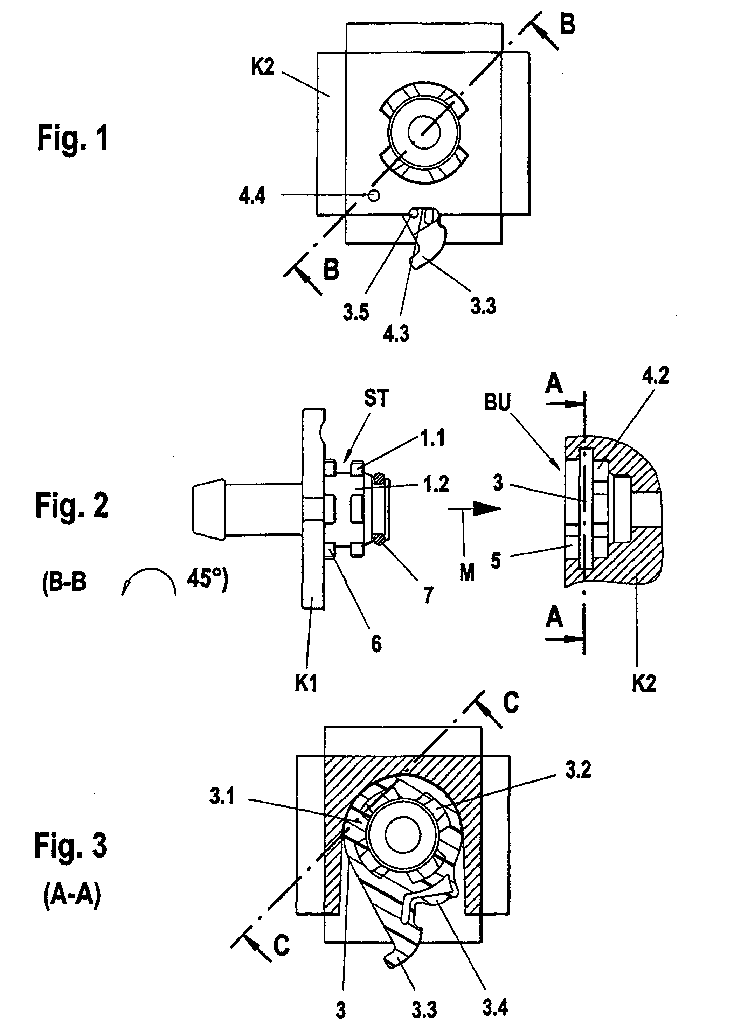

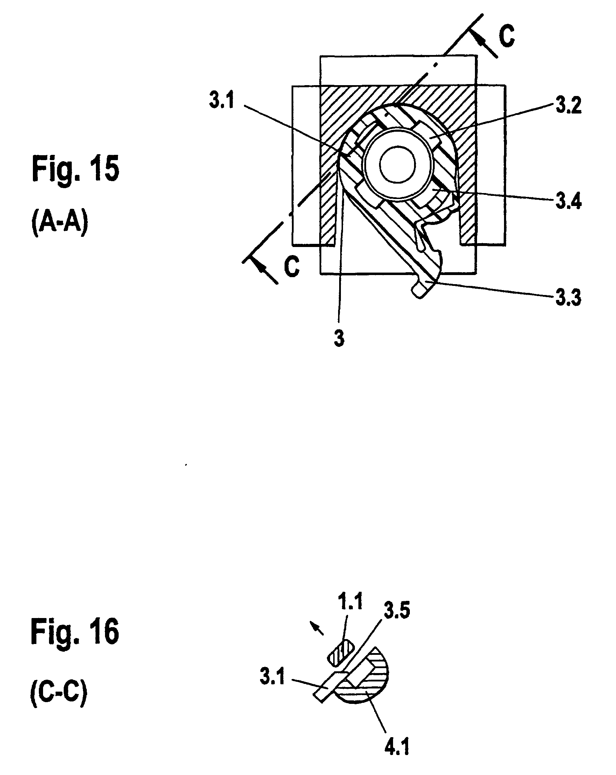

In den Fig. 1 bis 16 sind zwei, beispielsweise hydraulische Komponenten dargestellt, von denen eine Komponente K1 als Schlauchanschluß ausgebildet ist, während die andere Komponente K2, die nur mit ihrem Anschlußbereich angedeutet ist, beispielsweise ein Elektromagnetventil sein kann. Zur Verbindung der Komponenten dient eine Einrichtung, die als Steck-Einrastverbindung ausgebildet ist, wobei im dargestellten Ausführungsbeispiel die Komponente K1 ein steckerartiges Verbindungsteil ST und die Komponente K2 ein buchsenartiges Verbindungsteil BU aufweist.

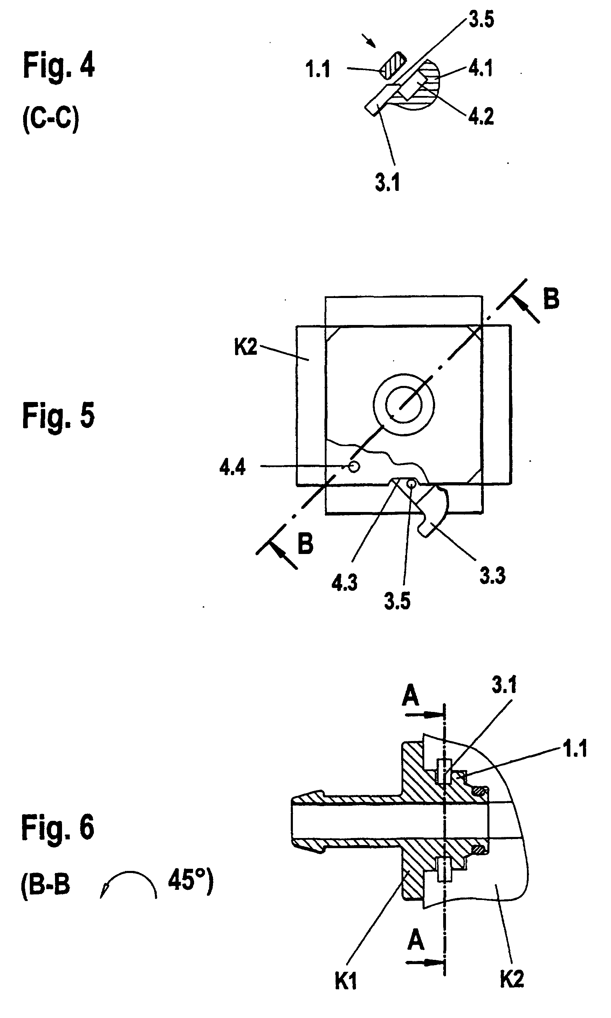

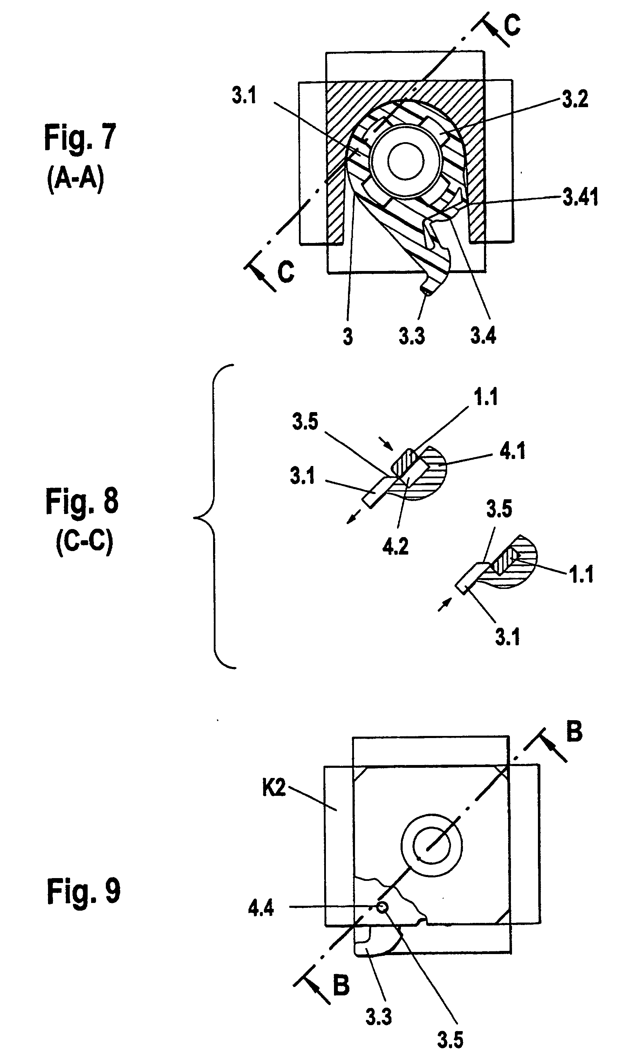

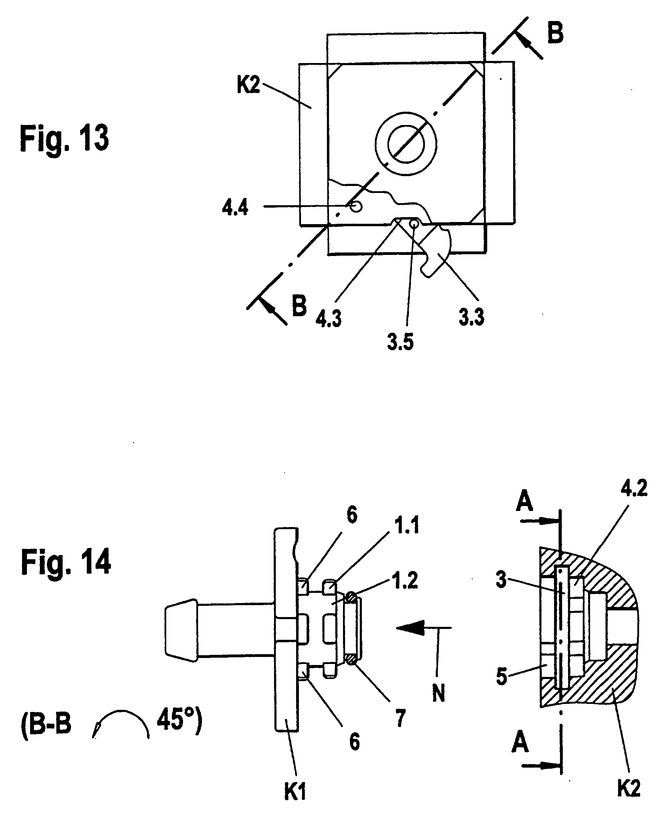

In den Zeichnungen sind die beiden Komponenten in unterschiedlichen Phasen der Montage und Demontage dargestellt. So zeigen die Fig. 1 bis 4 das steckerartige Verbindungsteil ST und das buchsenartige Verbindungsteil BU in einer ersten Phase der Montage kurz vor dem Zusammenstecken, die Fig. 5 bis 8 zeigen die beiden Komponenten in einer weiteren Phase kurz nach dem Zusammenstecken und dem Einrasten der weiter unten genauer beschriebenen Verbindungseinrichtung, die Fig. 9 bis 12 zeigen die Komponenten nach dem Zusammenstecken und Verriegeln zur Sicherung der Verbindung und die Fig. 13 bis 16 zeigen die Komponenten im Zustand der Demontage, in der sie wieder voneinander gelöst wurden.

Die Einrichtung zum Verbinden der beiden Komponenten K1 und K2 besitzt einen im buchsenartigen Verbindungsteil BU angeordneten um die Mittelachse dieses Teils drehbaren Verriegelungsring 3, der im dargestellten Ausführungsbeispiel vier sich radial nach innen erstreckende Verriegelungssegmente 3.1 trägt, die paarweise einander diametral gegenüberliegend angeordnet sind und eine vorgegebene Umfangsbreite aufweisen und zwischen denen Zwischenräume 3.2 angeordnet sind. Am steckerartigen Verbindungsteil ST sind ebenfalls vier sich radial nach außen erstreckende Verriegelungsnocken 1.1 in vorgegebenen Winkelabständen mit Zwischenräumen 1.2 angeordnet, wobei die Weite der Zwischenräume mindestens so groß ist, wie die Breite der Verriegelungssegmente 3.1 im buchsenartigen Verbindungsteil BU. Die Umfangsbreite der Zwischenräume 3.2 am Verriegelungsring 3 ist dagegen so, daß beim Einstecken des steckerartigen Verbindungsteils ST in das buchsenartige Verbindungsteil BU die Verriegelungsnocken 1.1 in entsprechender Winkelstellung des Verriegelungsrings 3 durch diese Zwischenräume 3.2 hindurchtreten können.

Wie den Zeichnungen zu entnehmen, ist die gesamte Anordnung derart, beim Einstecken des steckerartigen Verbindungsteils ST in das buchsenartige Verbindungsteil BU in einer durch Führungsmittel festgelegten Winkelstellung in Umfangsrichtung die Verriegelungssegmente 3.1 zwischen den Verriegelungsnocken 1.1 hindurchtreten, wobei die Einstecktiefe so festgelegt ist, daß die Verriegelungsnocken 1.1 im voll eingesteckten Zustand (s.Fig. 6) in Einsteckrichtung M gesehen, unmittelbar hinter der Bahn der Verriegelungssegmente 3.1 liegen und bei einer Verdrehung des Verriegelungsrings 3 aus einer Montagestellung (Fig. 5 bis 8) in die Verriegelungsstellung (Fig. 9 bis 12) von diesen hintergriffen werden, so daß eine feste Verbindung zwischen den beiden Komponenten hergestellt ist. Ein Dichtungsring 7 am vordersten Ende des steckerartigen Verbindungsteils ST sorgt für die notwendige Abdichtung.

Um eine sichere Führung in genau festgelegten Winkelstellungen in Umfangsrichtung beim Zusammenstecken des steckerartigen Verbindungsteils ST und des buchsenartigen Verbindungsteils BU zu ermöglichen, sind als Führungsmittel im buchsenartigen Verbindungsteil BU im Bereich unmittelbar hinter der Bahn der Verriegelungssegmente 3.1 am Innenumfang sich radial nach innen erstreckende Führungsrippen 4.1 angeordnet mit Zwischenräumen 4.2 zum Eintreten der Verriegelungsnocken 1.1. Diese Führungsrippen 4.1 greifen beim Einstecken in die Zwischenräume 1.2 zwischen den Verriegelungsnocken 1.1 ein und legen somit die mögliche Winkelstellung beim Einstecken fest. Entsprechend der Anzahl der Verriegelungsnocken 1.1 sind vier um 90° gegeneinander verdrehte Winkelstellungen beim Einstecken möglich.

Selbstverständlich sind auch Ausführungsformen möglich, bei denen die Anzahl der Verriegelungsnocken 1.1, der Verriegelungselemente 3.1 und Zwischenräume 3.2 sowie den Führungsrippen 4.1 und Zwischenräume 4.2 einem ganzzahligen Vielfachen von Vier entspricht.

Weiterhin sind, um den festen Sitz in der gewählten Einsteckstellung sicherzustellen, im buchsenartigen Verbindungsteil BU im Bereich in Einsteckrichtung M gesehen unmittelbar vor der Bahn der Verriegelungssegmente 3.1 am Innenumfang sich radial nach innen erstreckende Führungsrippen 5 angeordnet, die im eingesteckten Zustand des steckerartigen Verbindungsteils ST in Zwischenräume zwischen zusätzlich am steckerartigen Verbindungsteil ST angeordnete Führungsnocken 6 eingreifen, die axial fluchtend zu den Verriegelungsnocken 1.1 angeordnet sind. Zwischen den Verriegelungsnocken 1.1 und den Führungsnocken 6 ist in Umfangsrichtung ein Zwischenraum angeordnet, der im eingesteckten Zustand einen in Umfangsrichtung verlaufenden Freiraum für die Bahn der Verriegelungssegmente 3.1 am Verriegelungsring 3 darstellt.

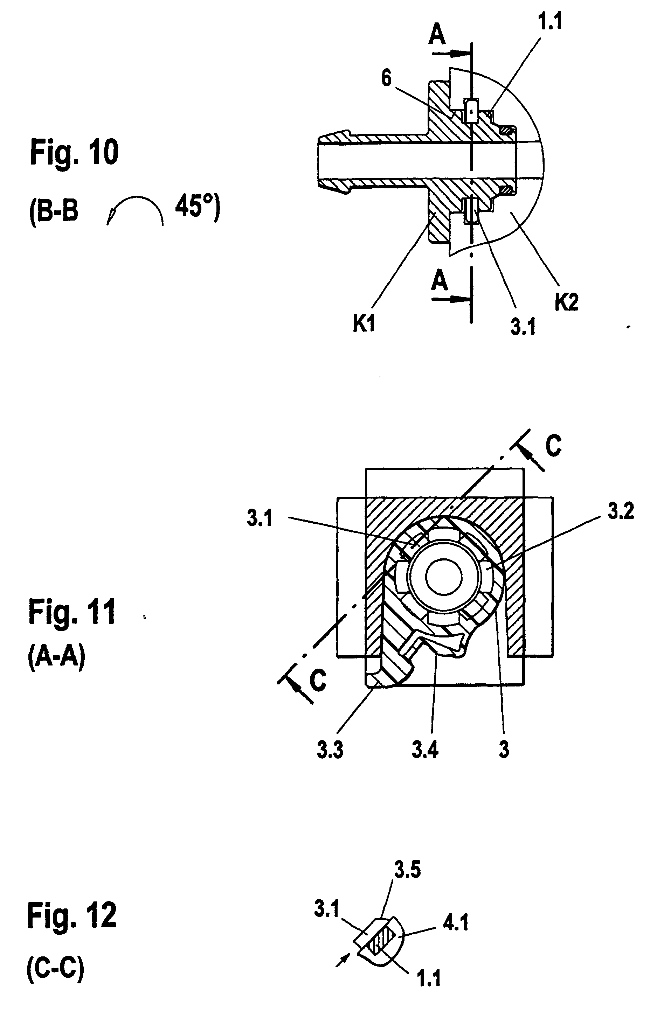

Um ein sicheres und einfaches Montieren der Verbindungseinrichtung zu gewährleisten, ist die genauere Ausbildung des Verriegelungsringes 3 so getroffen, daß er in der Fig. 1 bis 4 und 5 bis 6 dargestellten Montagestellung so steht, daß die Verriegelungssegmente 3.1 jeweils mit einem schmalen, mit einer in Einsteckrichtung verlaufenden Schrägfläche versehenen Randabschnitt 3.5 (s.Fig. 4 und 8) in die Einsteckbahn der Verriegelungsnocken 1.1 hineinragen, so daß der Verriegelungsring 3 beim Einstecken aus der Montagestellung gegen Federkraft um einen kleinen Winkelbetrag (s.Teildarstellung der Fig. 8) in eine Freigabestellung zurückgedreht wird. Dies kommt dadurch zustande, daß beim Einstecken die Verriegelungsnocken 1.1 auf die Schrägflächen 3.5 der Verriegelungssegmente 3.1 auftreffen und dadurch eine Kraft auf diese Verriegelungssegmente 3.1 ausüben, die zu dem entsprechenden Drehmoment führt. Nach dem Passieren der Verriegelungsnocken 1.1 wird durch die Federkraft der Verriegelungsring 3 in die Montagestellung zurückgedreht, so daß die Verriegelungssegmente 3.1 mit dem schmalen Randabschnitt hinter die Verriegelungsnocken 1.1 einrasten und so eine vorläufige axiale Arretierung der Verbindung bewirken. Es ist nun durch entsprechendes Verdrehen des Verriegelungsrings 3 mittels des Betätigungshebels 3.3 entweder möglich, diese vorläufige axiale Arretierung wieder zu lösen, um die Komponenten K1 und K2 wieder auseinander zu nehmen oder aber den Verriegelungsring 3 in die endgültige Verriegelungsstellung (Fig. 9 bis 12) zu drehen, in welcher die Verriegelungssegmente 3.1 die Verriegelungsnocken 1.1 voll hintergreifen (s. Fig. 12) und der feste Sitz der Verbindungseinrichtung gewährleistet ist. Aus dieser Verriegelungsstellung kann durch entsprechendes Verdrehen des Verriegelungsrings 3 mittels des Betätigungshebels 3.1 wieder in die Montagestellung und darüberhinaus in die Freigabestellung zurückgegangen werden, um die Verbindungseinrichtung wieder ganz zu lösen und die Komponenten K1 und K2 voneinander zu trennen und in Pfeilrichtung N (Fig. 14) auseinanderzuführen.

Die auf den Verriegelungsring 3 in Richtung aus der Freigabestellung in die Montagestellung wirkende Federkraft wird im dargestellten Ausführungsbeispiel durch ein Federband 3.4 erzeugt, das einstückig mit dem, beispielsweise aus Kunststoffmaterial gefertigten Verriegelungsring 3 verbunden ist. Es ist so am Außenumfang des Verriegelungsrings 3 angeformt, daß es eine im wesentlichen Z-förmige Form besitzt, wobei ein Ende mit dem Verriegelungsring 3 und das andere Ende mit dem Betätigungshebel 3.3 verbunden ist, beim Verdrehen des Verriegelungsrings 3 aus der in Fig. 3 dargestellten Montagestellung in die in Fig. 7 dargestellte Freigabestellung, stützt sich das Federband 3.4 am Innenumfang des buchsenartigen Verbindungsteils BU ab und es wird somit die erforderliche Federkraft erzeugt. Es ist weiterhin eine Einrastvorrichtung vorgesehen, in welche der Verriegelungsring 3 in der in Fig. 11 dargestellten Verriegelungsstellung einrastet, um ein Selbstlösen der Verriegelung zu verhindern und aus der er, unter Überwindung eines Widerstandes mittels des Betätigungshebels 3.3 in die Montagestellung zurückführbar ist. Die Einrastvorrichtung besteht aus einem am Betätigungshebel 3.3 angeordneten Zapfen 3.5, der in der Montagestellung (s.Fig. 1) und der Freigabestellung (s.Fig. 5) sich in einer Ausnehmung 4.3 des buchsenartigen Verbindungsteils BU bewegen kann, während er in der Verriegelungsstellung (s.Fig. 9) in eine Bohrung 4.4 des buchsenartigen Verbindungsteils BU einrastet.

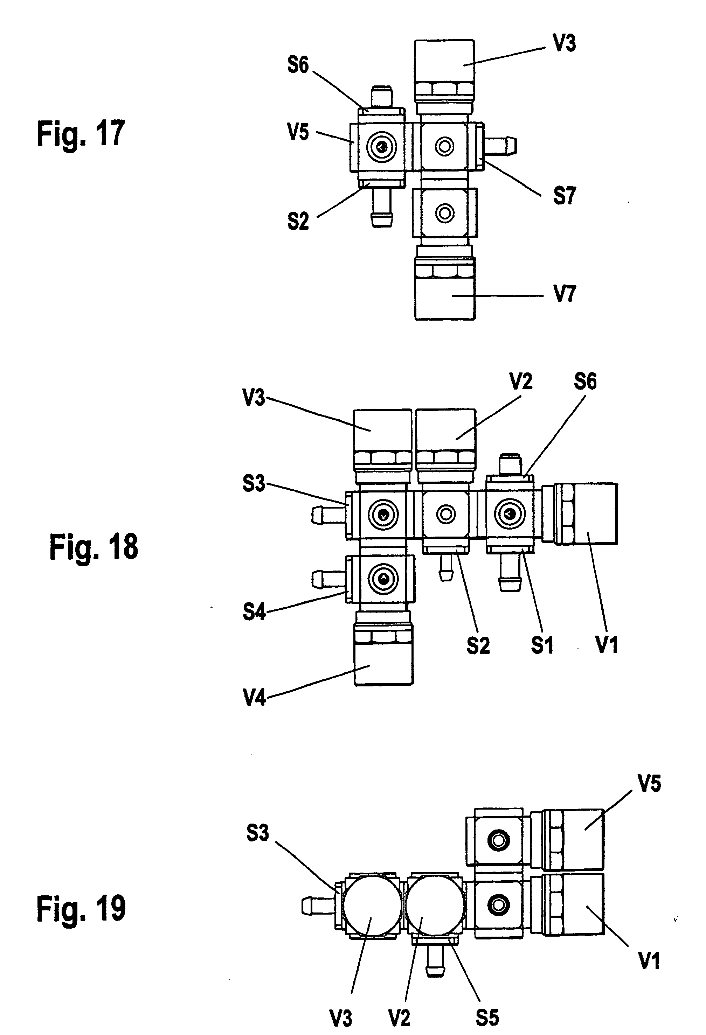

Die Fig. 17 bis 19 zeigen beispielhaft Möglichkeiten, die oben beschriebene Verbindungseinrichtung beim Zusammenschalten mehrerer hydraulischer oder pneumatischer Komponenten einzusetzen. Bei diesem Ausführungsbeispiel sind mehrere Elektromagnetventile V1 bis V5 zu einem sich in alle drei Raumrichtungen erstreckenden Block zusammengeschaltet und es sind außerdem noch Schlauchanschlüsse S1 bis S7 dazugeschaltet, die ebenfalls in alle drei Raumrichtungen ausgerichtet sind. Bei konventionellen Anordnungen würde die Montage und Demontage eines derartigen Blocks außerordentliche Schwierigkeiten bereiten. Sind diese Komponenten dagegen mit der anhand der Fig. 1 bis 16 geschilderten Verbindungseinrichtung miteinander verbunden, so ist es außerordentlich einfach, von dem in den Fig. 17 bis 19 dargestellten Block einzelne Komponenten abzunehmen oder auch aus dem Verband herauszulösen, um dafür andere Komponenten einzusetzen. Die im wesentlichen in radialer Richtung verlaufenden Betätigungshebel der buchsenartigen Verbindungsteile dieser Komponenten sind leicht in den Zwischenräumen zwischen den Komponenten unterzubringen und können von Hand oder mittels eines einfachen Werkzeugs aus der Montagestellung in die Freigabestellung oder in die Verriegelungsstellung bewegt werden.

## Patentansprüche

1. Einrichtung zum Verbinden von hydraulischen oder pneumatischen Komponenten, insbesondere von Elektromagnetventilen, miteinander, die jeweils an mindestens einer ihrer Außenseiten jeweils ein steckerartiges oder buchsenartiges Verbindungsteil einer Steck-Einrastverbindung aufweisen, wobei an den steckerartigen Verbindungsteilen mindestens ein sich in radialer Richtung erstreckendes Anschlagelement angeordnet ist, das im in das buchsenartige Verbindungsteil eingesteckten Zustand des steckerartigen Verbindungsteils von mindestens einem lösbaren Verriegelungselement hintergriffen werden kann, **dadurch gekennzeichnet, daß** im buchsenartigen Verbindungsteil (BU) ein um die Mittelachse dieses Teils drehbarer Verriegelungsring (3) angeordnet ist, der sich radial nach innen erstreckende Verriegelungssegmente (3.1) trägt und über einen nach außen geführten Betätigungshebel (3.3) um einen vorgegebenen Drehwinkel aus einer Montagestellung in eine Verriegelungsstellung verdrehbar ist, und am steckerartigen Verbindungsteil (ST) als Anschlagelemente mehrere, sich radial nach außen erstreckende Verriegelungsnocken (1.1) in vorgegebenen Winkelabständen mit Zwischenräumen (1.2) angeordnet sind, wobei die Weite dieser Zwischenräume (1.2) mindestens so groß ist wie die Breite der Verriegelungssegmente (3.1) in Umfangsrichtung und die Weite der Zwischenräume (3.2) zwischen den Verriegelungssegmenten (3.1) mindestens so groß ist wie die Breite der Verriegelungsnocken (1.1) in Umfangsrichtung und die Anordnung derart ist, daß beim Einstecken des steckerartigen Verbindungsteils (ST) in das buchsenartige Verbindungsteil (BU) in durch Führungsmittel festgelegten Winkelstellungen in Umfangsrichtung die Verriegelungssegmente (3.1) zwischen den Verriegelungsnocken (1.1) hindurchtreten und die Einstecktiefe so festgelegt ist, daß die Verriegelungsnocken (1.1) im voll eingesteckten Zustand in Einsteckrichtung (N) gesehen, unmittelbar hinter der Bahn der Verriegelungssegmente (3.1) liegen und bei einer entsprechenden Verdrehung des Verriegelungsrings (3) aus der Montagestellung in die Verriegelungsstellung von diesen hintergriffen werden.

2. Einrichtung nach Anspruch 1, **dadurch gekennzeichnet, daß** als Führungsmittel im buchsenartigen Verbindungsteil (BU) im Bereich unmittelbar hinter der Bahn der Verriegelungssegmente (3.1) am Innenumfang sich radial nach innen erstreckende Führungsrippen (4.1) angeordnet sind, die im eingesteckten Zustand des steckerartigen Verbindungsteils (ST) in die Zwischenräume (1.2) zwischen den Verriegelungsnocken (1.1) eingreifend, die Winkelstellung des steckerartigen Verbindungsteils (ST) in Umfangsrichtung festlegen.

3. Einrichtung nach Anspruch 1 oder 2, **dadurch gekennzeichnet, daß** der Verriegelungsring (3) in der Montagestellung so angeordnet ist, daß die Verriegelungssegmente (3.1) jeweils mit einem schmalen, mit einer in Einsteckrichtung verlaufenden Schrägfläche versehenen Randabschnitt (3.5) in die Einsteckbahn der Verriegelungsnocken (1.1) hineinragen und der Verriegelungsring (3) aus der Montagestellung gegen Federkraft um einen kleinen Winkelbetrag in eine Freigabestellung zurückdrehbar ist, wobei die Ausbildung derart ist, daß beim Einstecken des steckerartigen Verbindungsteils (ST) in das buchsenartige Verbindungsteil (BU) die Verriegelungsnocken (1.1) auf die Schrägflächen (3.5) auftreffen und über die Verriegelungssegmente (3.1) der Verriegelungsring (3) in die Freigabestellung gedreht wird, aus welcher er nach Passieren der Verriegelungsnocken (1.1) wieder in die Montagestellung einrastet, in der die Verriegelungsnocken (1.1) von den schmalen Randabschnitten (3.5) der Verriegelungssegmente (3.1) zur vorläufigen axialen Arretierung hintergriffen werden, wobei diese Arretierung durch Verdrehen des Verriegelungsrings (3) gegen die Federkraft mittels des Betätigungshebels (3.3) aus der Montagestellung in die Freigabestellung wieder lösbar ist.

4. Einrichtung nach einem der Ansprüche 1 bis 3, **dadurch gekennzeichnet, daß** am Umfang des steckerartigen Verbindungsteils (ST) vier, jeweils paarweise einander diametral gegenüberliegende Verriegelungsnocken (1.1) angeordnet sind und der Verriegelungsring (3) vier Verriegelungssegmente (3.1) trägt.

5. Einrichtung nach Anspruch 2, **dadurch gekennzeichnet, daß** als zusätzliche Führungsmittel im buchsenartigen Verbindungsteil (BU) im Bereich unmittelbar vor der Bahn der Verriegelungssegmente (3.1) am Innenumfang sich radial nach innen erstreckende Führungsrippen (4.1) angeordnet sind, die im eingesteckten Zustand des steckerartigen Verbindungsteils (ST) in Zwischenräume zwischen zusätzlich am steckerartigen Verbindungsteil angeordnete Führungsnocken (6) eingreifen, wobei die Führungsnocken (6) axial fluchtend zu den Verriegelungsnocken (1.1) angeordnet sind und einen in Umfangsrichtung verlaufenden Freiraum zum Durchtritt der Verriegelungssegmente (3.1) begrenzen.

6. Einrichtung nach Anspruch 3, **dadurch gekennzeichnet, daß** die auf den Verriegelungsring (3) zwischen Montagestellung und Freigabestellung wirksame Federkraft durch ein mit einem Ende am Außenumfang des Verriegelungsrings (3) angeformtes Federband (3.4) erzeugt wird, das sich am Innenumfang des buchsenartigen Verbindungsteils (BU) abstützt.

7. Einrichtung nach Anspruch 6, **dadurch gekennzeichnet, daß** das andere Ende des eine im wesentlichen Z-förmige Gestalt aufweisenden Federbandes (3.4) am Betätigungshebel (3.3) angeformt ist.

8. Einrichtung nach einem der Ansprüche 1 bis 4, **dadurch gekennzeichnet, daß** der Verriegelungsring (3) in der Verriegelungsstellung durch eine lösbare Rastvorrichtung (3.5-4.4) festgelegt ist.

## Claims

1. Device for connecting together hydraulic or pneumatic components, particularly solenoid valves, which in each case comprise a plug-like or socket-like connecting part of a plug- and latch-in connection, at least at one of their outer sides, wherein at least one stop element, which extends in the radial direction, is disposed at the plug-like connecting parts, behind which element at least one releasable interlocking element can engage when the plug-like connecting part is inserted in the socket-like connecting part, **characterised in that** an interlocking ring (3) is disposed in the socket-like connecting part (BU), which ring can rotate about the centre axis of this part, bears interlocking segments (3.1), which extend radially inwards, and can be rotated by means of an operating lever (3.3), which leads outwards, through a predetermined angle of rotation from an assembly position into an interlocking position, and a plurality of interlocking protuberances (1.1), which extend radially outwards, are disposed at predetermined angular spacings with interspaces (1.2) at the plug-like connecting part (ST) as stop elements, wherein the width of these interspaces (1.2) is at least as great as the width of the interlocking segments (3.1) in the circumferential direction, and the width of the interspaces (3.2) between the interlocking segments (3.1) is at least as great as the width of the interlocking protuberances (1.1) in the circumferential direction, and the arrangement is such that, upon inserting the plug-like connecting part (ST) in the socket-like connecting part (BU) in angular positions in the circumferential direction which are determined by guide means, the interlocking segments (3.1) pass through between the interlocking protuberances (1.1) and the depth of insertion is determined such that, when fully inserted and viewed in the insertion direction (N), the interlocking protuberances (1.1) lie directly behind the path of the interlocking segments (3.1), and when the interlocking ring (3) is accordingly rotated from the assembly position into the interlocking position, this ring engages behind the interlocking protuberances.

2. Device according to Claim 1, **characterised in that** guide ribs (4.1), which extend radially inwards, are disposed as guide means in the socket-like connecting part (BU) in the region directly behind the path of the interlocking segments (3.1) at the inner circumference, which ribs, engaging in the interspaces (1.2) between the interlocking protuberances (1.1) when the plug-like connecting part (ST) is in the inserted state, determine the angular position of the plug-like connecting part (ST) in the circumferential direction.

3. Device according to Claim 1 or 2, **characterised in that**, when in the assembly position, the interlocking ring (3) is disposed such that the interlocking segments (3.1) in each case project by way of a narrow edge portion (3.5), which is provided with an inclined face extending in the insertion direction, into the insertion path of the interlocking protuberances (1.1), and the interlocking ring (3) can be rotated back through a small angular value against spring force from the assembly position into a release position, wherein the formation is such that, upon inserting the plug-like connecting part (ST) in the socket-like connecting part (BU), the interlocking protuberances (1.1) strike the inclined faces (3.5), and the interlocking ring (3) is rotated by means of the interlocking segments (3.1) into the release position, from which - after passing the interlocking protuberances (1.1) - it again latches into the assembly position, in which the narrow edge portions (3.5) of the interlocking segments (3.1) engage behind the interlocking protuberances (1.1) for the purpose of temporary axial retention, wherein this retention can be released again by rotating the interlocking ring (3) against the spring force by means of the operating lever (3.3) from the assembly position into the release position.

4. Device according to any one of Claims 1 to 3, **characterised in that** four interlocking protuberances (1.1), in each case lying diametrically opposite one another in pairs, are disposed at the circumference of the plug-like connecting part (ST), and the interlocking ring (3) bears four interlocking segments (3.1).

5. Device according to Claim 2, **characterised in that** guide ribs (4.1), which extend radially inwards, are disposed as additional guide means in the socket-like connecting part (BU) in the region directly in front of the path of the interlocking segments (3.1) at the inner circumference, which ribs engage in interspaces between guide protuberances (6) additionally disposed at the plug-like connecting part (ST) when the latter is in the inserted state, wherein the guide protuberances (6) are disposed in axial alignment with the interlocking protuberances (1.1) and define a free space, extending in the circumferential direction, for the passage of the interlocking segments (3.1).

6. Device according to Claim 3, **characterised in that** the spring force acting on the interlocking ring (3) between the assembly position and the release position is produced by a spring strip (3.4) which is formed onto the outer circumference of the interlocking ring (3) by way of one end and is supported at the inner circumference of the socket-like connecting part (BU).

7. Device according to Claim 6, **characterised in that** the other end of the spring strip (3.4), which is substantially Z-shaped, is formed onto the operating lever (3.3).

8. Device according to any one of Claims 1 to 4, **characterised in that** the interlocking ring (3) is fixed in the interlocking position by a releasable latching device (3.5-4.4).

## Revendications

1. Dispositif pour la jonction de composants hydrauliques ou pneumatiques les uns avec les autres, en particulier de vannes électromagnétiques, qui comportent sur l'une au moins de leurs faces extérieures une partie de jonction respective mâle ou femelle pour une jonction à enfichage/enclenchement, avec au moins un élément de butée agencé sur les parties de liaison mâles et s'étendant en direction radiale, lequel est susceptible, dans la situation de la partie de jonction mâle enfichée dans la partie de jonction femelle, d'être engagé par l'arrière par au moins un élément de verrouillage libérable, **caractérisé en ce que**, dans la partie de jonction femelle (BU) est agencée une bague de verrouillage (3) capable de tourner autour de l'axe médian de cette partie, ladite bague portant des segments de verrouillage (3.1) qui s'étendent à l'intérieur et étant capable de tourner à l'aide d'un levier d'actionnement (3.3) passant vers l'extérieur, sur un angle de rotation prédéterminé depuis une position de montage jusque dans une position de verrouillage, et sur la partie de jonction mâle (ST) sont agencées à titre d'éléments de butée plusieurs cames de verrouillage (1.1) qui s'étendent radialement vers l'extérieur à des écarts angulaires prédéterminés avec des intervalles (1.2), la largeur de ces intervalles (1.2) étant au moins aussi importante que la largeur des segments de verrouillage (3.1) en direction périphérique, et la largeur des intervalles (3.2) entre les segments de verrouillage (3.1) étant au moins aussi importante que la largeur des cames de verrouillage (1.1) en direction périphérique et l'agencement étant tel que lors de l'enfichage de la partie de jonction mâle (ST) dans la partie de jonction femelle (BU), dans des positions angulaires fixées par des moyens de guidage, en direction périphérique, les segments de verrouillage (3.1) s'engagent entre les cames de verrouillage (1.1), et la profondeur d'enfichage est ainsi choisie que les cames de verrouillage (1.1), vues à l'état totalement enfiché dans la direction d'enfichage (N), sont placées directement derrière la trajectoire des segments de verrouillage (3.1) et, lors d'une rotation correspondante de la bague de verrouillage (3) hors de la position de montage jusque dans la position de verrouillage, lesdites cames de verrouillage sont engagées par l'arrière par ladite bague de verrouillage.

2. Dispositif selon la revendication 1, **caractérisé en ce que**, à titre de moyens de guidage dans la partie de jonction femelle (BU) dans la zone immédiatement derrière la trajectoire des segments de verrouillage (3.1) sur la périphérie intérieure, sont agencées des nervures de guidage (4.1) qui s'étendent radialement vers l'intérieur et qui, dans la situation enfichée de la partie de jonction mâle (ST), fixent la position angulaire de la partie de jonction mâle (ST) en direction périphérique par engagement dans les intervalles (1.2) entre les cames de verrouillage (1.1).

3. Dispositif selon l'une ou l'autre des revendications 1 et 2, **caractérisé en ce que** la bague de verrouillage (3) dans la position de montage est ainsi agencée que les segments de verrouillage (3.1) pénètrent chacun, avec un tronçon de bordure étroit (3.5) doté d'une surface oblique s'étendant en direction d'enfichage, jusque dans la trajectoire d'enfichage des cames de verrouillage (1.1), et la bague de verrouillage (3) est susceptible d'être tournée hors de la position de montage à l'encontre d'une force élastique et sur une petite amplitude angulaire jusque dans une position de libération, l'agencement étant tel que lors de l'enfichage de la partie de jonction mâle (ST) dans la partie de jonction femelle (BU) les cames de verrouillage (1.1) rencontrent les surfaces obliques (3.5) et la bague de verrouillage (3) est tournée à l'aide des segments de verrouillage (3.1) jusque dans la position de libération depuis laquelle, après passage des cames de verrouillage (1.1), la bague s'enclenche à nouveau dans la position de montage, dans laquelle les cames de verrouillage (1.1) sont engagées par l'arrière par les tronçons de bordure étroits (3.5) des segments de verrouillage (3.1) pour réaliser un arrêt axial provisoire, et ledit arrêt peut à nouveau être libéré par rotation de la bague de verrouillage (3) à l'encontre de la force d'un ressort et au moyen du levier d'actionnement (3.3) hors de la position de montage jusque dans la position de libération.

4. Dispositif selon l'une des revendications 1 à 3, **caractérisé en ce que** sur la périphérie de la partie de jonction mâle (ST) sont agencées quatre cames de verrouillage (1.1) disposées respectivement en opposition diamétrale par paires respectives, et **en ce que** la bague de verrouillage (3) porte quatre segments de verrouillage (3.1).

5. Dispositif selon la revendication 2, **caractérisé en ce que**, à titre d'organes de guidage additionnels dans la partie de jonction femelle (BU) et dans la région immédiatement devant la trajectoire des segments de verrouillage (3.1) sont agencées des nervures de guidage (4.1) sur la périphérie intérieure et s'étendant radialement vers l'intérieur, lesquelles s'engagent, dans l'état enfiché de la partie de jonction mâle (ST) dans des intervalles entre des cames de guidage (6) agencées en supplément sur la partie de jonction mâle, lesdites cames de guidage (6) étant agencées en alignement avec les cames de verrouillage (1.1) et délimitant un espace libre, s'étendant en direction périphérique, pour la traversée des segments de verrouillage (3.1).

6. Dispositif selon la revendication 3, **caractérisé en ce que** la force qui agit sur la bague de verrouillage (3) entre la position de montage et la position de libération est produite par une bande à ressort (3.4) conformée par une extrémité sur la périphérie extérieure de la bague de verrouillage (3), et s'appuyant sur la périphérie intérieure de la partie de jonction femelle (BU).

7. Dispositif selon la revendication 6, **caractérisé en ce que** l'autre extrémité de la bande à ressort (3.4) qui présente essentiellement une configuration en Z est conformée sur le levier d'actionnement (3.3).

8. Dispositif selon l'une des revendications 1 à 4, **caractérisé en ce que** la bague de verrouillage (3) est immobilisée dans la position de verrouillage par un dispositif d'enclenchement libérable (3.5-4.4).
